# EUROPEAN PATENT APPLICATION

(11) **EP 2 150 055 A2**
(43) Date of publication of application: **03.02.2010**
(21) Application number: 08021966.0
(22) Date of filing: 18.12.2008
(51) Int. Cl.: H04N 7/18, G08B 13/196, H04N 5/225

(54) **Video surveillance equipment**

(30) Priority: 29.07.2008 ES 200802253
(71) Applicant: Caruncho Torga, Enrique, 28004 Madrid (ES)
(72) Inventor: Caruncho Torga, Enrique, 28004 Madrid (ES)
(74) Representative: Carvajal y Urquijo, Isabel

(57) **Abstract**

Video surveillance equipment comprising a air-tight case (1) containing at least one digital image recorder (3) and a modular and waterproof high sensitivity camera (6), with an interchangeable scanning head (16) and lens (7), which focuses towards the outside through a hole (8) in the case (1). The equipment also has a monitor in the cover (2) of the case (1) for the viewing of the area to be recorded and the viewing of the images taken by the camera (6) and a feeding battery. A distribution plate centers the distribution from the battery to the digital recorder (3), the monitor (5) and the camera (6), and automates the turning on and off of the camera in just one switch (11). The camera (6) can be separated from the case (1) using an extension cord (12) and fixed to tree trunks and branches or other elements in the surroundings through fixing means (17).

## Description

### TECHNICAL FIELD OF THE INVENTION

The present invention relates to the technical field of security and surveillance equipments and systems, specifically video surveillance equipments, and even more specifically, video surveillance equipments used in isolated places, fields, woods, rural areas, outdoor areas and areas without power supply.

### BACKGROUND OF THE INVENTION

Nowadays there exist different types of video surveillance systems, which generally have a camera and a recorder, and are connected to the power supply and operate continuously.

However, there is also a great need for video surveillance in difficult access places, or places without power supply, to use other surveillance means, to avoid criminal activity by poachers, pyromaniacs, thefts or any other type of criminal activity in general, or to be able to record and study animals.

In these areas, fauna observation and surveillance are currently carried out by battery-operated equipments with a camera that operates when presence is detected by shooting a photo with flash and infrared light.

It was therefore desirable a surveillance equipment with great autonomy, easy to use and easy to hide while it records.

### DESCRIPTION OF THE INVENTION

The present invention solves the current problems in the state of the art using a video surveillance equipment with a rigid and air-tight case which houses a digital image recorder that saves the recordings made by a high sensitivity camera in a memory card. Additionally, the recorder also records sound. This recorder enables to register the instant in which each image has been taken, and thus, for example, it is possible to determine the exact moment in which a criminal act has been committed.

The high sensitivity camera is modular and waterproof, and comprises a body which ends in a hole of the case, having said body of the camera a video scanning head on which a lens is placed, being both interchangeable, focusing the camera towards the outside through the hole of the case.

Furthermore, on the case cover there is a first chassis to which a monitor is fixed for the digital recorder to view the area to be recorded as well as the images taken by the camera and recorded by said digital recorder.

The video surveillance equipment is battery-operated and has a distribution plate to center the power distribution from the battery to the digital recorder, the monitor and the camera. Moreover, the distribution plate automates the equipment shutdown and turn-on using only one turn-on and shutdown switch, which makes it unnecessary to have a specific training to operate the equipment.

Furthermore, the improvements comprise wired and wireless Internet connection and data transmission means, through which the video surveillance equipment can be connected to any computer or receptor for transmitting the recordings made, using Ethernet VLAN and WLAN standard.

Preferably, the video surveillance equipment object of the present invention also comprises wireless Internet connection and data transmission means, connected to the case in a connecting point, through which the video surveillance equipment will be connected to any computer or receptor using a wireless connection for transmitting the recordings made without need to use a cable as when the Ethernet standard was used.

According to a preferred embodiment of the invention, both the connecting point of the Internet connection and data transmission means and the case inlet for the external power supply are watertight to avoid deterioration due to water, dirt or external particles, thus resulting the video surveillance equipment totally watertight.

Furthermore, the equipment offers the possibility to connect the camera through an extension cord, which enables to separate said camera from the case and place it far away from it, there existing means to seal and close and waterproof the case hole when the camera is separated from the case.

The video surveillance equipment can incorporate several additional cameras to the original camera, connected to the sides of the case. Like the original camera, these additional cameras have an interchangeable video scanning head on which an interchangeable lens is installed. Through these additional cameras a greater viewing range is achieved, thus enabling to record the whole area that surrounds the video surveillance equipment with a 360° angle.

Like the original camera, the video surveillance equipment has an extension cord connected to each one of the scanning heads of the additional cameras, which enables the placement of said scanning heads away from the case. They also have sealing means that close and waterproof the connecting points to the case to prevent water, dirt or particles from entering the case, which could deteriorate the equipment.

The recorder has several different operation modes according to the specific needs of each moment. Through active recording activated by movement detection, which is the most important characteristic of the recorder, and also the factory default mode, the user programs the equipment to be activated when movement is detected. Thus the user turns on the camera but the recording will not start until movement is detected. Additionally, there exist other two recording modes which can be activated if necessary. Through constant recording, which is the easiest way to start the recording, said recording starts using the turn-on switch and ends with the same switch. For this mode the presence of the user is needed to start and stop the recording. Finally, with the programmed recording mode, the user can program a starting and finishing recording time and also camouflage the equipment, and thus his/her presence will not be needed later.

Preferably, the video surveillance equipment has a set of control and navigation means consisting of a keypad, a navigation keyboard, and a navigation trackball which serves as a mouse to control the configuration, recording and viewing of the recording.

Furthermore, the video surveillance equipment has at least one USB connection or a memory card slot for fast and secure downloading of data from the recordings to external memories.

Besides being battery-operated, the video surveillance equipment has an inlet for an external power supply to which a larger external battery can be connected to give it more autonomy, or else, the inlet can be used to connect a solar charger.

Thus, being completely air-tight, the equipment offers the advantage of enabling to hide it completely anywhere, even in a sandy or humid area, being the hole through which the camera focuses the only part left uncovered, thus securing that the equipment will not be damaged.

Additionally, to guarantee battery saving, the monitor comprises a second contact switch in the cover first chassis, which connects the monitor when the case cover is opened and disconnects it when said cover is closed. Thus, the monitor only works when the user wishes to view either an area to be recorded or an already made recording, that is, when it is strictly necessary. When the cover is closed, the equipment can continue recording but the display monitor will not be on.

The video surveillance equipment has an audio and video outlet to view the recorded material and to connect it with an external recorder or television to view the images recorded by the digital recorder.

As it has been indicated before, the camera of the video surveillance equipment can work inside the case focusing through a hole, or separated from said case by an extension cord. If the latter is the case, the case can be buried or hidden among trees or undergrowth, and the camera can be fixed by different supporting means to branches, high rocks, posts, trunks, walls, etc. These supporting means can be hooks, clamps, grips, magnetic support, and alike.

Additionally, according to a preferred embodiment, the video surveillance equipment can comprise different camouflage hides which camouflage the case with the camera inside it, or the case and the camera separately when they are separated by the extension cord.

### DESCRIPTION OF THE DRAWINGS

For a better understanding of the invention, there follows a description of an illustrative, yet non-limiting embodiment of the invention, making reference to a series of drawings.
Figure 1 shows a perspective view of an embodiment of a video surveillance equipment object of the present invention.
Figure 2 shows a plan view of the video surveillance equipment shown in figure 1.
Figure 3 shows a lateral view of the video surveillance equipment shown in figure 1.
Figure 4 shows a perspective frontal view of a preferred embodiment of the invention with additional cameras, data transmission means and control and navigation means.
Figure 5 shows a perspective back view of the video surveillance equipment shown in figure 4.
Figure 6 shows a perspective lateral view of the same video surveillance equipment shown in figures 4 and 5.
Figure 7 shows, in a schematic way, a case of the video surveillance equipment covered with a camouflage hide, according to a particular embodiment of the invention.
Figure 8 shows an embodiment of the fixing means for the camera of a video surveillance equipment of the present invention.
Figure 9 shows a different embodiment of the fixing means for the camera of a video surveillance equipment object of the present invention.

In these drawings reference is made to the following elements:
1. case
2. case cover
3. digital image recorder
4. first chassis
5. monitor
6. camera
7. camera lens
8. case hole
9. second chassis
10. connector between the camera and the case
11. first shutdown and turn-on switch
12. extension cord
13. memory card
14. second contact switch
15. air-tight plug of the camera
16. video scanning head
17. camera fixing means
18. camouflage hide
19. additional cameras
20. keypad
21. navigation trackball
22. USB connection
23. Internet connection and data transmission means

### DESCRIPTION OF PREFERRED EMBODIMENTS OF THE INVENTION

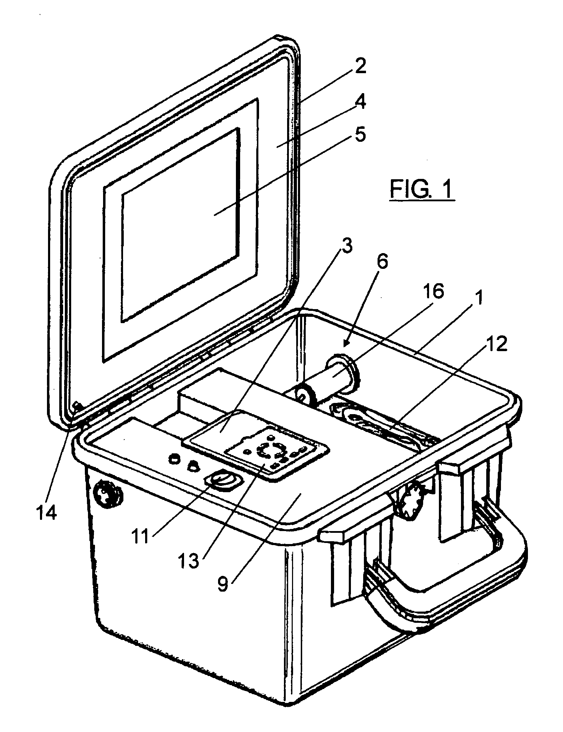

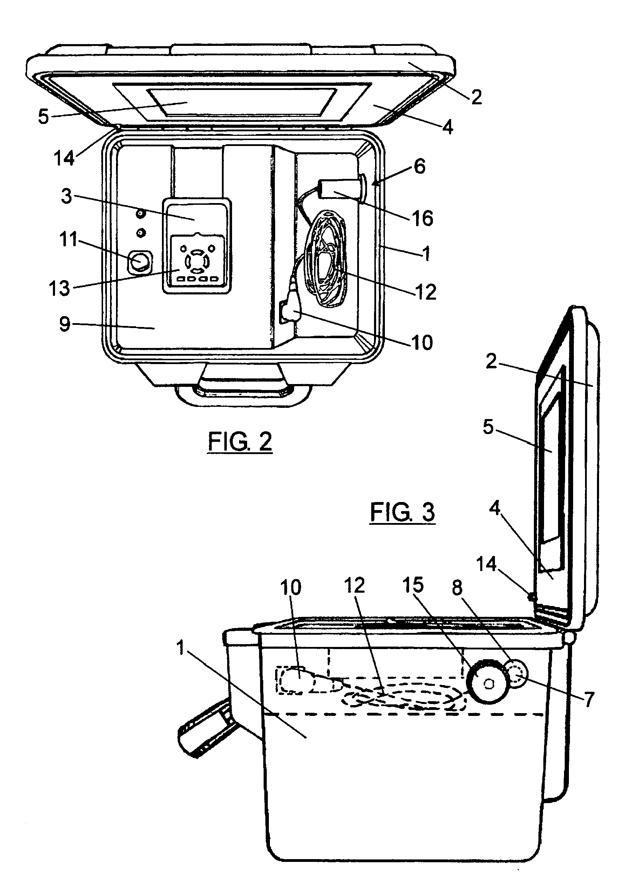

As it can be seen in figures 1 to 3, the video surveillance equipment object of this invention comprises a rigid and air-tight case 1 with a cover 2 which contains on the inside the elements needed for recording, saving and reproducing images. Given the conditions under which the video surveillance equipment will operate, many times outdoors, the case 1 withstands harsh weather conditions and constant use, has considerable hardness and is wear- and shock-resistant and can be used by unqualified users without any specific training for it. It is small and can be easily carried by one user with only one hand using a handle.

Inside the case 1 there is a second chassis 9 to which a digital image recorder 3 is fixed to make recordings and save them in a memory card 13. The memory card 13 is replaceable and, for the video surveillance to be useful, it has at least 2-4 GB capacity, being able to store up to 324,000 images. The recorder 3 can record from 1 image per second up to 25 images per second, and said recorder 3 registers the instant of each recorded image and sound, indicating the time and date.

As shown in figures 1 to 3, the video surveillance equipment also has in the second chassis 9 inside the case 1 a modular and waterproof high sensitivity camera 6, which is connected to the case through a camera connector 10, and comprises an interchangeable video scanning head 16 and an interchangeable lens 7 installed on the scanning head 16. Said camera, according to a particular embodiment, can record black and white or color images, is waterproof and fit to work outdoors. It also has high sensitivity with high quality capture and an illumination level of 0.0003 Lux. In a particular embodiment of the invention, there exist an air-tight plug 15 of the camera 6 which protects the lens 7 and enables the video surveillance equipment to be completely buried, including the camera, when said camera is not in use.

The camera 6 is inside the case 1 and focuses towards the outside through a hole 8, or lateral window on the said case 1. In a preferred embodiment of this invention, camera 6 is joined to the case 1 by an extension cord 12 which enables to place said camera 6 far away from the case 1. According to this embodiment, there exist sealing means to close and waterproof the hole 8 of the case 1 when camera 6 is placed outside it, which guarantees the tightness of said case 1 and keeps intact all the elements inside it.

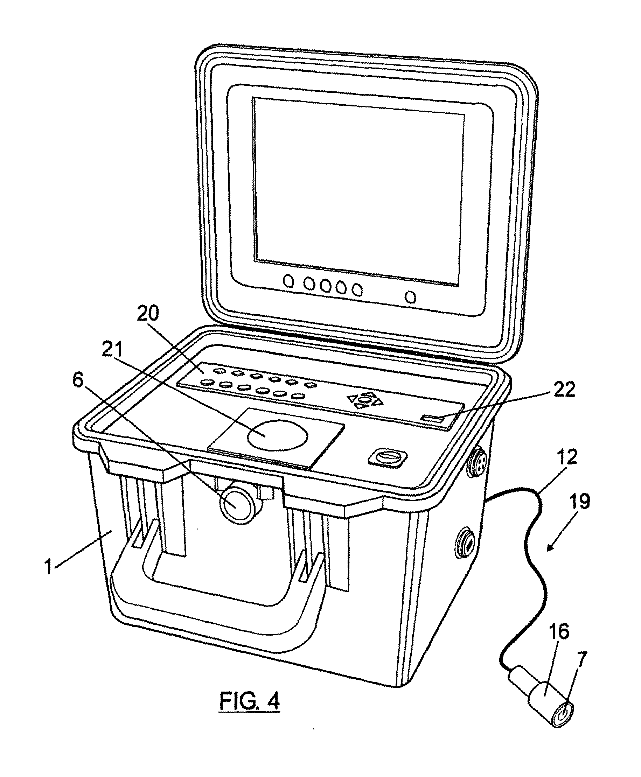

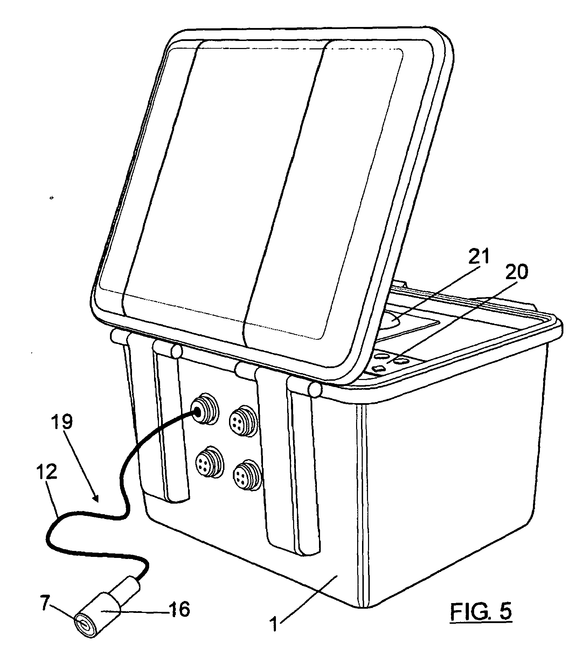

Figures 4 to 6 show a preferred embodiment of the invention in which the video surveillance equipment has several additional cameras 19, additional to the main camera 6, which are connected to the side of the case 1, to be able to control and record everything in a 360° area around the surveillance equipment. Like the main camera 6, each one of the additional cameras 19 have an interchangeable video scanning head 16 in which an interchangeable lens 7 is installed.

Preferably, the video surveillance equipment has an extension cord 12 connected to each one of the scanning heads 16 of the additional cameras 19, which enables the placement of said scanning heads 16 away from the case 1. Thus the case 1 can be hidden in a safe place away from the areas to be recorded, while the additional cameras can record different areas, separated from the said case 1 by the extension cords 12. To prevent dirt and particles from entering the equipment through the additional cameras 19 connections to the case 1, preferably there exist permanent sealing means which close and waterproof said connections.

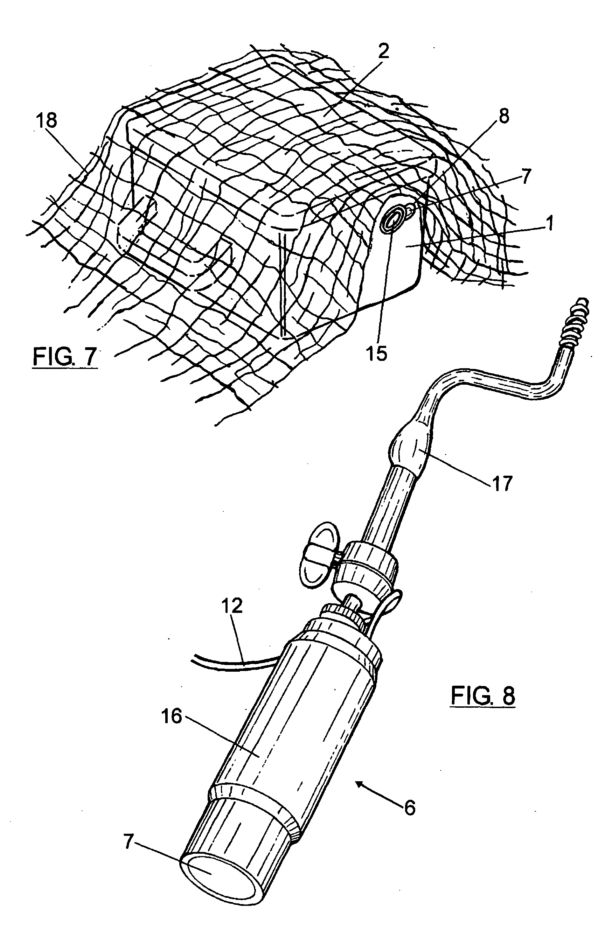

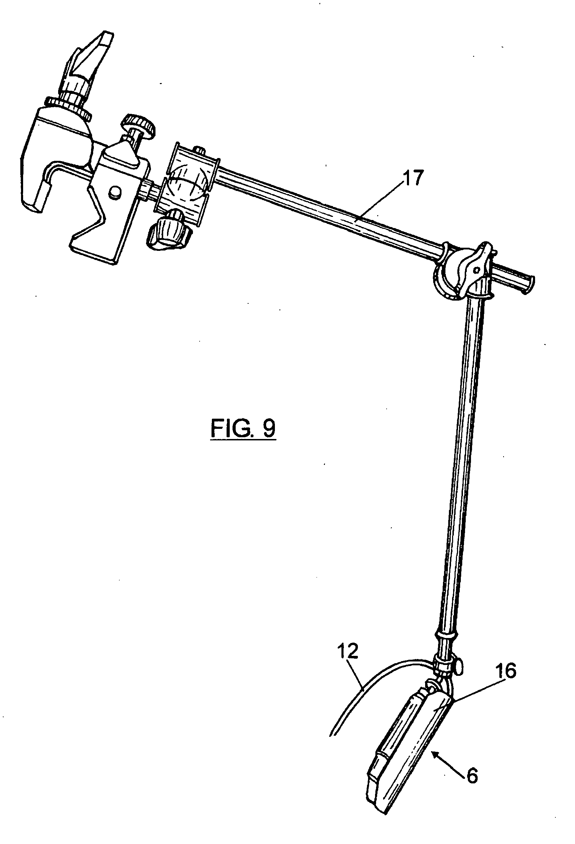

To place the camera 6 and the additional cameras 19 in areas located far away from the case 1, in a preferred embodiment of the invention, the video surveillance equipment comprises fixing means 17 which enable to fix the camera 6 and the additional cameras 19 to branches, rocks, tree trunks, posts, soil, walls. These fixing means can be clips, grounding rods, bore-bits, suction pads, belts, adhesive means or clamps. Figures 8 and 9 show different embodiments of these fixing means 17.

Both the case 1 and the scanning head 16 of the cameras 6, 19 can have different colors to be camouflaged with the surroundings where they are placed, being khaki a possible color for camouflaging it in the country.

Furthermore, in a particular embodiment, the scanning heads 16 of the cameras 6, 19 comprise an exterior cover which covers it and can be realized in different colors for camouflaging it wherever it is placed. Likewise, the fixing means 17 of the camera to the different elements in its surroundings can also be realized in different color schemes for an appropriate camouflage according to said surroundings.

Additionally, the video surveillance equipment can have, as it can be seen in figure 7, camouflage hides 18 realized in different color scheme to camouflage it in the surroundings where it is placed.

Thus, the video surveillance equipment will be an element deterring criminal activity, since being camouflaged criminals will not know exactly where it is located and sometimes will not commit the criminal act.

As regards using it for other purposes, such as animal surveillance and study, the animals will not be frightened since they will not see the video surveillance equipment and will carry out their usual activities normally.

On the cover 2 of the case 1 there is a first chassis 4 in which a monitor 5 is placed for the viewing of the area to be recorded by the digital recorder 3 and the viewing of the images taken by the camera 6 and recorded by the digital recorder 3 in the memory card 13.

Furthermore, in a particular embodiment of the invention, the video equipment has an audio and video outlet to be connected to an external recorder or to an external television set.

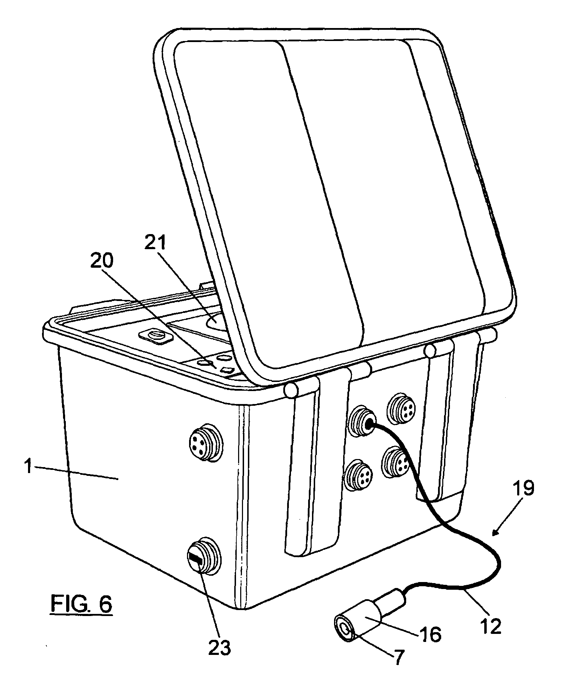

According to an additional preferred characteristic, the video surveillance equipment object of the present invention has Internet connection and data transmission means 23 through cable, as it is shown in figure 6, through which the video surveillance equipment can be connected to any computer for transmitting the recording made, using Ethernet standard.

According to a preferred embodiment of the invention, the video surveillance equipment comprises additionally wireless Internet connection and data transmission means to connect the case 1 in a connecting point, wireless means through which the video surveillance equipment can be connected to any computer using a wireless connection for transmitting and downloading the recordings made, or even controlling the equipment through the computer, using the appropriate software, all of which can be done without needing any cable, as it happened when using the Ethernet standard.

Preferably, both the connecting point of the wireless Internet connection and data transmission means and the inlet of the case 1 for the external power supply are watertight, so as to prevent water, dirt or external particles from deteriorating the equipment, when the case 1 is camouflaged, which enables said case 1 to be completely buried underwater or in soil without deteriorating, being the video surveillance equipment completely watertight.

To facilitate the configuration of the equipment, the recording control and the later viewing of said recording, preferably, the video surveillance equipment has a keypad 20 and a navigation trackball 21. Figures 4 to 6 clearly show said keypad 20 and navigation trackball 21.

Figure 4 shows that the video surveillance equipment also has at least one USB connection 22 for connecting external memories and downloading data to said memories.

In the video surveillance equipment there exists a battery which supplies the necessary power to all the components. This battery grants at least 84 hours of operation, and 20 hours of continuous video, which in the recording activated by movement detection mode translates into more than a month of recording.

The distribution plate concentrates current distribution from the battery to the equipment components, and automates the turn-on and shutdown of said equipment in just one switch 11, thus granting a simple handling of the equipment without needing any specific training for using it. In a particular embodiment of the invention, there exist two fuses that protect the distribution plate and the feeding battery. Furthermore, a diode on said distribution plate prevents the emission of electric energy outside said video surveillance equipment, thus preventing any risk of fire. This equipment is made for Mediterranean weather, and therefore, it withstands temperatures from -15°C up to +60°C, and its resistance prevents short-circuits and terminal detachment.

Besides using the battery, in a particular embodiment, the video surveillance equipment has an inlet for an external power supply, to which a larger external battery can be connected so as to provide the said equipment with greater autonomy. Additionally, a solar charger can be connected to the external power supply inlet.

As a safety measure, the video surveillance equipment makes the recordings in an anti-shock disk, with solid memory and great capacity. Likewise, the entire electronics of the equipment is arranged in an anti-shock chassis.

According to a preferred embodiment of the invention, the digital recorder 3 has different operation modes. One of them is the constant recording, which is the most simple one, in which the digital recorder 3 starts recording when the user presses the turn-on and shutdown switch 11 and stops when said switch 11 is pressed again. The disadvantage of this mode is that the presence of the user is needed for turning the equipment on and off. There exists a second mode, which is namely programmed recording, in which the user programs a starting date and time and a stop date and time for the recording, which offers the advantage of not requiring the user presence to start and stop the recording. In a third recording mode, the user programs the recorder 3 to start recording when movement is detected through the camera 6. That is, the user only needs to turn on the turn-on and shutdown switch 11 but his/her presence will not be necessary later to start the recording, which will only start when the video surveillance equipment detects movement, that is, when it is necessary. According to this preferred embodiment of the invention, the equipment detects movement at a distance of more than 100 meters, and the recording activated by movement detection mode is factory activated, which facilitates the use of said equipment.

Additionally, according to a preferred embodiment of the invention, to guarantee saving battery power consumption, the monitor 5 comprises a second contact switch 14 in the first chassis 4 of the cover 2, which connects said monitor 5 when the cover 2 of the case 1 is opened and disconnects it when said cover 2 is closed. Thus, the monitor 5 will only work when the user needs to see the area to be recorded, or an already made recording, that is, when it is strictly necessary. When the cover 2 is closed, the equipment can continue recording, but without the viewing monitor 5 being on.

## Claims

1. Video surveillance equipment, **characterized by** comprising
- a rigid and air-tight case (1) with cover (2), comprising said case (1), interconnected on the inside,
- a digital image recorder (3) which saves the recordings in a memory card (13),
- a modular, waterproof, high sensitivity camera (6), which ends in a hole (8) of the case (1), which comprises
- an interchangeable video scanning head (16), which has installed in it
- an interchangeable lens (7),
focusing said camera (6) towards the outside through the hole (8) of the case (1),
- a monitor (5) fixed to the first chassis (4) placed in the cover (2) of the case (1) for the viewing of the area to be recorded by the digital recorder (3) and the viewing of the images taken by the camera (6) and recorded by said digital recorder (3) in the memory card (13),
- a feeding battery, and
- a distribution plate that centers the current distribution from a power point external to the battery, and from the battery to the digital recorder (3) and monitor (5), and automates the shutdown and turn-on of the video surveillance equipment in only one turn-on and shutdown switch (11).

2. Video surveillance equipment, according to claim 1, **characterized by** comprising wired Internet connection and data transmission means (25).

3. Video surveillance equipment, according to any of the preceding claims, **characterized in that** it additionally comprises wireless Internet connection and data transmission means connected to the case (1) in a connecting point.

4. Video surveillance equipment, according to the preceding claim, **characterized in that** the inlet for the external power supply and the connection point of the wireless Internet connection and data transmission means to the case (1) are watertight.

5. Video surveillance equipment, according to any of the preceding claims, **characterized by** also comprising an air-tight plug (15) for the camera (6).

6. Video surveillance equipment, according to any of the preceding claims, **characterized by** comprising
- an extension cord (12) connected to the scanning head (16) of the camera (6) which enables to place said scanning head (16) far away from the case (1), and
- sealing means which close and waterproof the hole (8) of the case (1) while the scanning head (16) is separated from said case (1).

7. Video surveillance equipment, according to any of the preceding claims, **characterized by** also comprising several additional cameras (19), additional to the camera (6) connected to the sides of the case (1), each one of them comprising
- an interchangeable video scanning head (16) in which there is installed
- an interchangeable lens (7).

8. Video surveillance equipment, according to any of the preceding claims, **characterized by** comprising
- an extension cord (12) connected to each one of the scanning heads (16) of the additional cameras (19), which enables to place said scanning heads (16) far away from the case (1), and
- sealing means which close and waterproof the connecting points of the additional cameras (19) to the case (1).

9. Video surveillance equipment, according to any of the preceding claims, **characterized in that** the digital recorder (3) registers the instant in which each image is recorded.

10. Video surveillance equipment, according to any of the preceding claims, **characterized in that** the image recording of the digital recorder (3) is comprised among constant recording, recording with start and stop times programmed by the user, recording activated by movement detection and a combination of them.

11. Video surveillance equipment, according to any of the preceding claims, **characterized in that** the digital recorder (3) also saves sound in the memory card (13).

12. Video surveillance equipment, according to any of the preceding claims, **characterized by** comprising
- a keypad (22), and
- a navigation trackball (23)
for controlling the recording and viewing of said recording.

13. Video surveillance equipment, according to any of the preceding claims, **characterized by** comprising at least one USB connection (24) for downloading data to external memories.

14. Video surveillance equipment, according to any of the preceding claims, **characterized in that** the monitor (5) comprises a second contact switch (14) in the first chassis (4) which connects said monitor (5) when the cover (2) of the case (1) is opened and disconnects it when the cover (2) of the case (I) is closed.

15. Video surveillance equipment, according to any of the preceding claims, **characterized in that** the distribution plate comprises
- at least one protection fuse for the electronic components of the equipment and one protection fuse for the feeding the battery, and
- one diode which prevents the emission of electric energy outside said video surveillance equipment.

16. Video surveillance equipment, according to any of the preceding claims, **characterized by** comprising a sound and video outlet for connecting said equipment to a selected external device, either an external recorder or a television set.

17. Video surveillance equipment, according to any of the preceding claims, **characterized by** comprising an inlet for an external power supply, either a solar charger and an external battery.

18. Video surveillance equipment, according to any of the preceding claims, **characterized by** also comprising fixing means (17) for the camera (6) and the additional cameras (19), for fixing said camera (6) and said additional cameras (19) to branches, rocks, posts, tree trunks, soil, walls and panels.

19. Video surveillance equipment, according to the preceding claim, **characterized in that** the fixing means (17) are selected among clips, grounding rods, bore-bits, clamps, suction pads, belts, adhesive binders and a combination of these.

20. Video surveillance equipment, according to any of the preceding claims, **characterized by** comprising camouflage hides (18) realized in various color schemes to camouflage said video surveillance equipment in the surroundings where it is located.
